# EUROPÄISCHE PATENTSCHRIFT

(11) **EP 2 816 177 B1**
(45) Veröffentlichungstag und Bekanntmachung des Hinweises auf die Patenterteilung: **06.09.2017**
(21) Anmeldenummer: 14001544.7
(22) Anmeldetag: 02.05.2014
(51) Int. Cl.: E04H 12/08, E04H 12/12, F03D 13/20

(54) **Schwingungsdämpfer für Türme von Windkraftanlagen**
Vibration damper for towers of wind-energy plants
Amortisseurs de vibrations pour des tours d'éoliennes

(30) Priorität: 08.05.2013 EP 13002448
(43) Veröffentlichungstag der Anmeldung: 24.12.2014
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- EP-A1- 1 533 521
- EP-A2- 2 369 096
- WO-A1-2006/005323
- FR-A1- 2 892 441
- US-A1- 2005 223 673

## Beschreibung

Die Erfindung betrifft Türme von insbesondere Windkraftanlagen, welche neuartige Vorrichtungen aufweisen, welche zur Vermeidung oder Reduzierung von typischen ungewünschten Schwingungen, insbesondere Torsions- und Biegeschwingungen und ggf. damit verbundenen Geräuschen am und im Turm beitragen.

Die Türme von Windkraftanlagen werden mit zunehmender Leistung der Anlagen höher. In der Zwischenzeit werden sehr oft Turmhöhen von über 100m, nicht selten bis zu 200m erreicht. Bei Binnenlandanlagen werden Windkraftanlagen auf möglichst hohen Türmen installiert, damit diese in dem höher liegenden Bereich größerer Windgeschwindigkeiten mit geringeren Turbulenzen arbeiten können.

Die Türme bestehen in der Regel aus Stahl mit einer sehr geringen Materialdämpfung, so dass die Türme weitestgehend ungedämpft sind, was zur Folge hat, dass bereits geringste Erregerkräfte einen solchen Turm zu starken Schwingungen anregen.

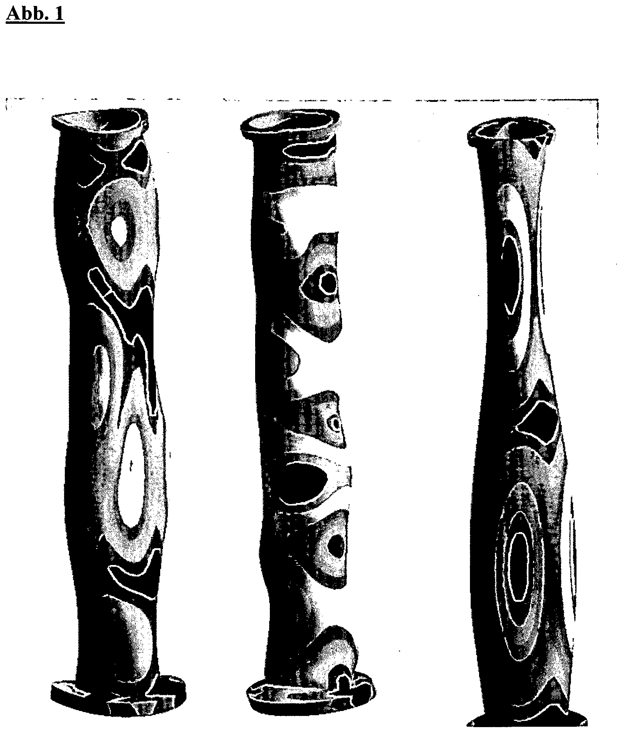

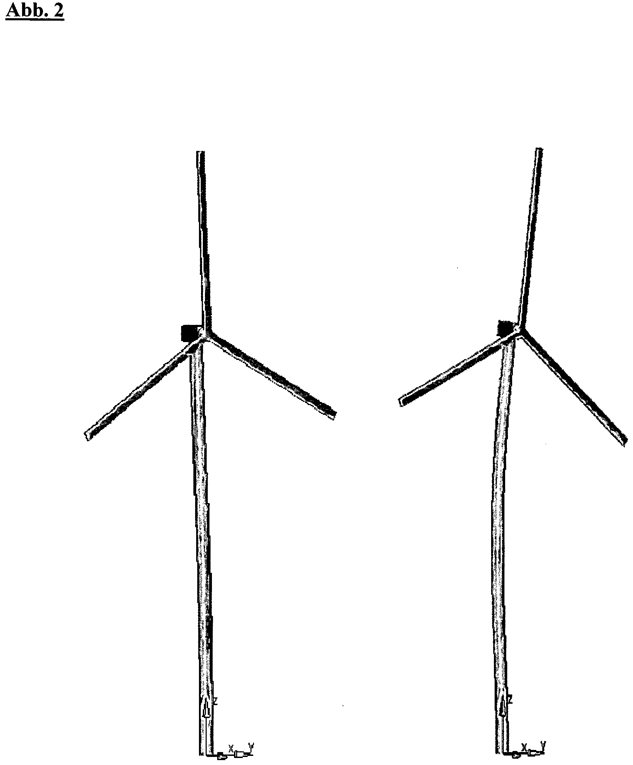

Windkraftanlagen unterliegen somit naturgemäß zusätzlichen und besonders ausgeprägten Kräften, welche vor allem durch die Rotorbewegung als solche, insbesondere in Form von Unwucht, als auch durch teilweise extreme Winde, die aus verschiedensten Richtungen auf die Rotorblätter, die Gondel, den Turm und die gesamte Anlage insgesamt einwirken, erzeugt werden. Durch die Erregerkräfte kann es nicht nur zu Biegeschwingungen des Turmes in der 1. und 2. Eigenfrequenz (Abb. 2) kommen sondern auch zu entsprechenden tangentialen Torsionsschwingungen (Abb. 1), entsprechend der erzeugten Frequenzen. Bei den zum Einsatz kommenden Off-Shore Anlagen muss der Turm um das Maß der Wassertiefe verlängert werden, was die Schwingungsfähigkeit der Türme verstärkt. Gleichzeitig tritt eine zusätzliche Erregung durch den Wellengang auf. Die zugrundeliegenden Frequenzen treten also insbesondere an der inneren Oberfläche des Turmes in radialer und tangentialer Richtung auf und können zur Materialermüdung in der Turmwand führen.

Lösungen zur Dämpfungen von Schwingungen des Turmes von Windkraftanlagen sind bekannt. So wird beispielsweise in der EP 1 008 747 A1 ein speziell konzipierter Pendeltilger vorgeschlagen, der im Inneren des Turmes in einer auszuwählenden Höhe angebracht wird. Der Nachteil dieses an sich effektiven Systems ist es, dass viel Platz im Inneren des Turmes benötigt wird, der oft nicht vorhanden ist. Eine gänzlich andere Lösung wird in der EP 1 533 521 A1 beschrieben. Der Turm wird hier mittels um den Turm verlaufenden Versteifungsschichten aus faserverstärkten Kunststoffen versehen, die zu einer Verminderung der Schallabstrahlung beitragen sollen. In der Praxis hat sich dieses einfache System jedoch nicht durchgesetzt, da sein Beitrag zur effektiven Turmbedämpfung nicht befriedigend zu sein scheint.

Es bestand also die Aufgabe, eine Dämpfung für die erzeugten Schwingungen des Turmes einer Windkraftanlage zur Verfügung zu stellen, die die beschriebenen Nachteile der im Stand der Technik bekannten Lösungen nicht mehr aufweist, gleichzeitig aber besonders effektiv die Störfrequenzen der Turmschwingungen bekämpft.

Die Aufgabe wurde durch die technische Lösung wie sie folgend und in den Ansprüchen beschrieben, gelöst.

So wurde gefunden, dass insbesondere torsionale Schwingungen aber auch die bekannten niederfrequenten Biegeschwingungen des Turmes von Windkraftanlagen durch Anbringung von Ringschichten aus Verbundmaterialen, bestehend aus Stein oder steinähnlichen Materialien und Elastomer vorzugsweise auf der Innenseite der Turmwandung für eine hocheffektive und platzsparende Dämpfung des Turmes sorgen, welcher durch unterschiedliche Frequenzen und unterschiedliche Schwingungsformen insbesondere an der inneren Oberfläche des Turmes in radialer und senkrechter Richtung erregt wird.

Prinzipiell liegt der Erfindung die Idee zugrunde, den Turm mit entsprechend angeordneten Bausteinen, welcher der Turmform angepasst sind, bildlich gesprochen, "auszumauern", wobei zwischen den einzelnen Bausteinen und zwischen Bausteine und Turmwand elastomere Schichten angeordnet sind. Die Bausteine selbst können auch durch eine fest verbundenen Mischung aus Bausteinmaterial (Bruchstücke, Teilchen, Kies, Sand) und Elastomermaterial, beispielsweise eingebracht als Kügelchen oder Elastomerabfall, ersetzt werden. Das entstehende Verbundformsteinmaterial kann durch Erniedrigung oder Erhöhung des Elastomeranteils besonders flexibel gestaltet werden, wodurch die Dämpfung gezielt beeinflusst werden kann.

Gegenstand der Erfindung ist somit eine Dämpfungsvorrichtung zur Dämpfung von Torsions- und Biegeschwingungen von Türmen, vorzugsweise von Windkraftanlagen, vorzugsweise von Metall/Stahltürmen von Windkraftanlagen, umfassend ein Verbundmaterial aus Formsteinmaterial und Elastomermaterial, wobei das Verbundmaterial in Form der Wand des Turmes, vorzugsweise der runden Turmwand, gefertigt ist, und über eine Elastmerschicht mit der Turmwand verbunden ist, gegenüber dieser verspannt ist, vorzugsweise zusätzlich vorgespannt ist, und Teile oder Bereiche der Turmwand, vorzugsweise der Innenfläche der Turmwand einnimmt.

Das Formsteinmaterial kann hierbei erfindungsgemäß selbst ein Verbundmaterial sein, welches aus einer Mischung im Wesentlichen aus groben und / oder feinen Elastomermaterialteilchen und groben und / oder feinen Bruchstücken oder Teilchen aus Formsteinmaterial besteht, und in entsprechend der Turmwand geformten Teilen in Form von Formbausteinen zur Verfügung gestellt wird.

Das Formsteinmaterial können aber auch entsprechend der Turmwandung geformte feste, harte Formbausteine aus Beton, Betonwerkstein, Naturstein, Kiesel, Ziegelstein, Kies oder Sand sein, welche untereinander durch Schichten besagten Elastomermaterials fest miteinander verbunden sind.

Die Elastomermaterialien gemäß der vorliegenden Erfindung umfassen im Wesentlichen hochdämpfenden Naturkautschuk, Naturkautschukderivat oder vorzugsweise elastische polymeren Kunststoffe oder Kunststoffgemische. Das Elastomer kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 30 bis 100 Shore, insbesondere 50 bis100 Shore verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt.Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Polyethylen, Polypropylen, Acrylat-, Äthylenacrylat, Silicon- oder Fluor- Kautschuke bzw. Kunststoffe. Besonders geeignet für die erfindungsgemäße Lösung sind elastomere Materialen aus Polyethylen, Polypropylen und Polyurethan, die alle anderen Kunsstoffe, die ein relative hohes Elastizitätsmodul sowie eine Shore Härte von über 30, vorzugsweise über 45, insbesondere 60 - 95 aufweisen. [0014] Das Verbundmaterial der erfindungsgemäße Dämpfungsvorrichtung besteht also erfindungsgemäß entweder aus festen, harten Formbausteinen, welche untereinander mit elastomeren Schichten verbunden sind, oder aus Formbausteinmaterial, welches selbst ein Verbundmaterial aus Elastomermaterial und festen Beton- oder Steinkomponenten darstellt, das wiederum durch Elstomerschichten mit der Turmwandung verbunden ist, um somit die Schwingungen des Turmes aufzunehmen und an die als Tilgermasse dienende festen Beton- oder Steinkomponenten weiterzuleiten.

Vorzugsweise ist die Dämpfungsvorrichtung, bzw. das beschriebene Verbundmaterial über die Elastomerschicht gegenüber der Turmwandung vorgespannt. Hierzu besitzt die erfindungsgemäße Dämpfungsvorrichtung in einer besonderen Ausführungsform weitere Vorrichtungen zur Verspannung des Verbundmaterials bzw. der Vorrichtung selbst. Diese können Verschraubungen oder Klemmen sein, welche beispielsweise mit Hilfe von entsprechend angeordneten Bohrungen in den Bausteinen angebracht werden können. Die tangentiale Vorspannung erfolgt durch geeignete tangentiale Vorspannelemente, welche das durch die Formbausteine gebildete Gewölbe gegen die Turmwandung presst. In senkrechter Richtung können die Formbausteine ebenfalls Bohrungen besitzen, mit welchen sie vertikal verspannt werden.

Die Anordnung der erfindungsgemäßen Dämpfungsvorrichtungen in oder am Turm richtet sich nach Art der zu dämpfenden Schwingung, welche am oder im Turm auftritt. Bei Torsionsschwingungen ist es vorteilhaft, die erfindungsgemäßen Dämpfungsvorrichtungen in Form von horizontal angeordneten durchgehenden Ringen oder Ringsegmenten anzubringen. Diese Ringe können auf verschiedene Höhen im oder am Turm angebracht sein, entsprechend der auftretenden Schwingungen

Bei einer anderen Ausführungsform sind einzelne Ringsegmente senkrecht über die Länge oder Teilen der Turmlänge angebracht. Dies ist insbesondere vorteilhaft, um niederfrequente Biegeschwingungen des Turmes zu dämpfen. Zweckmäßigerweise werden 2, 4, 6 oder 8 oder mehr solcher senkrechten Segmente symmetrisch über den Umfang des Turmes verteilt.

Auch Kombinationen von vertikaler geschlossener Ringanordnung und senkrechter streifenartiger Anordnung der besagten Dämpfungsvorrichtungen sind erfindungsgemäß umfasst.

Die waagrechten bzw. horizontalen Ringe oder Ringsegmente oder die senkrechten Ringsegmente oder Streifen umfassen mindestens zwei senkrechten Schichten aus Verbundmaterial, wobei diese senkrechten Schichten wiederum durch Elastomerschichten miteinander verbunden sind. Wie bereits erwähnt kann das Verbundmaterial entweder aus Formsteinen üblicher Größe selbst bestehen, die durch Elastomerschichten miteinander verbunden sind, oder selbst schichten aus Verbundmaterial von Elastomer und Stein/Beton etc. sein.

Die Ringe oder Ringsegmente aus Verbundmaterialen können unterschiedlich dick sein. Da sie die Masse bilden, welche dies Schwingungen des Turmes aufnehmen, ist nicht nur ihre Zusammensetzung und Fläche von Bedeutung, sondern auch ihre Dicke. Im einfachsten Fall können übliche Betonsteine zwischen 15 und 35cm Dicke eingesetzt werden, bzw. entsprechende Formsteine oder Formsteinverbundmaterialien dieser Dicken. In der Regel, ist dies ein Vielfaches der Dicke der Turmwandung, beispielsweise das zwei- bis acht-fache.

Die erfindungsgemäßen Dämpfungsvorrichtungen eigenen sich insbesondere bei Türmen aus Stahl oder Metallen, da solche selbst kaum eine Eigendämpfung besitzen. Weiterhin eigenen sich die erfindungsgemäßen Dämpfungsvorrichtungen vorzugsweise zur Anbringung an der inneren Oberfläche der Turmwandung. Sie nehmen hier recht wenig Platz und auch nur entlang der Turmwandung ein. Insbesondere wird der oft anderweitig benötigte zentrale Innenraum des Turmes freigehalten.

Gegenstand der Erfindung ist weiterhin die Verwendung der beschriebenen und beanspruchten Dämpfungsvorrichtungen an und in Türmen von Windkraftanlagen.

Gegenstand der Erfindung sind letztlich Windkraftanlagen selbst, welche mit einer oder mehreren erfindungsgemäßen Turm-Dämpfungsvorrichtungen ausgestattet sind.

### Beschreibung der Abbildungen:

Abb. 1 zeigt graphisch die möglichen Körperschallanregungen eines Turmes einer Windkraftanlage.
Abb. 2 zeigt graphisch die Biegeschwingung der ersten Eigenfrequenz einer Windkraftanlage.

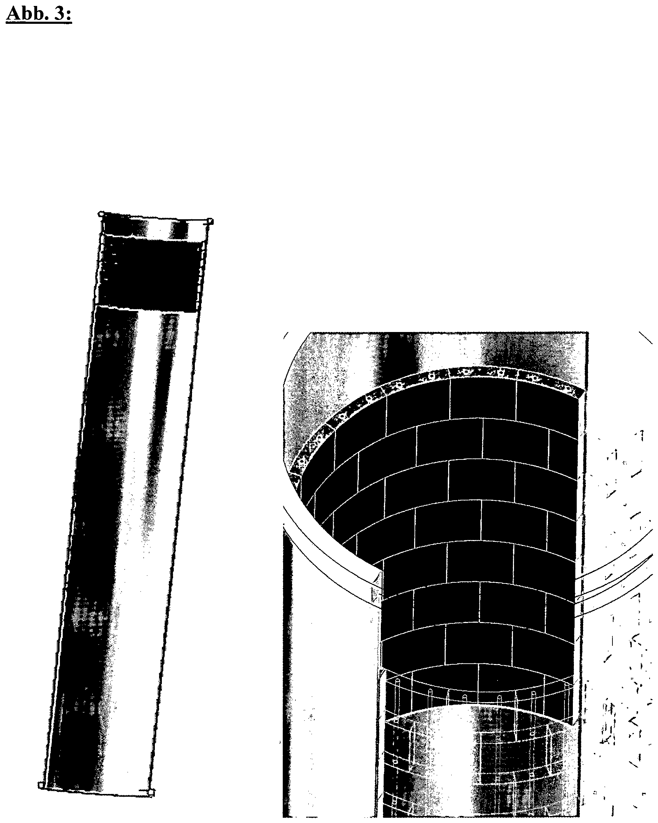

Abb. 3a und b zeigt (3-D Schnitt) den Einsatz eines erfindungsgemäßen Dämpfers im Turm einer Windkraftanlage.

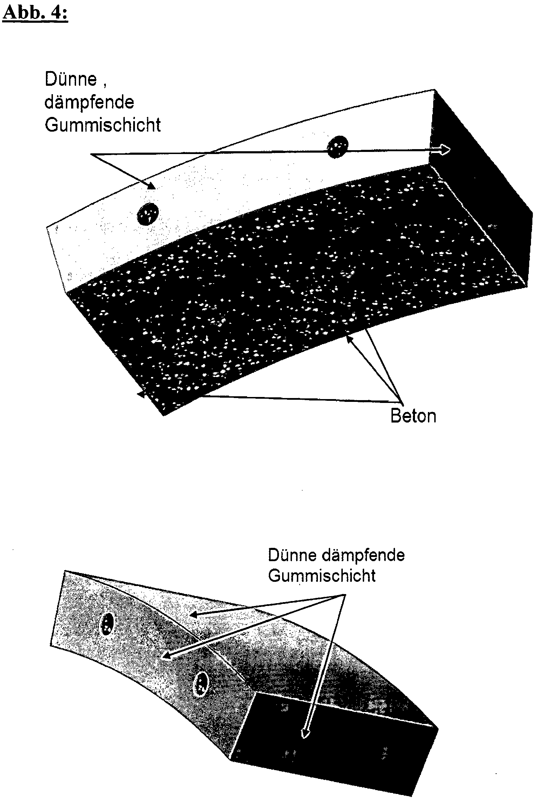

Abb. 4a und b zeigt einen erfindungsgemäßen Formbaustein mit Angabe der Elastomerschichten und Bohrungen für Befestigungen untereinander und zur Vorspannung der Elemente gegenüber der Turmwandung.

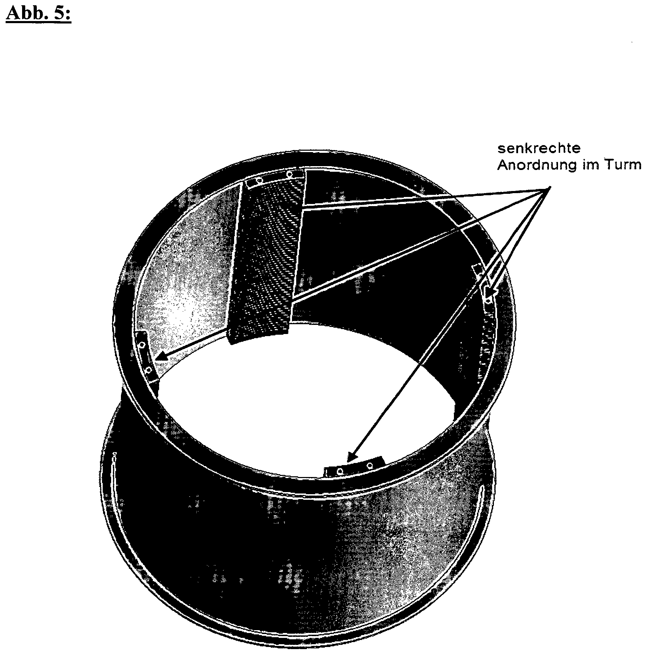

Abb. 5 zeigt eine 3-D Sicht eines Turmes mit Anbringung von senkrecht angeordneten erfindungsgemäßen Dämpfungsvorrichtungen.

## Patentansprüche

1. Dämpfungsvorrichtung geeignet zur Dämpfung von Torsions- und Biegeschwingungen von Türmen, umfassend ein Verbundmaterial bestehend im Wesentlichen aus Formsteinmaterial und Elastomermaterial, welches angepasst an die Form der Turmwandung ist, wobei das Verbundmaterial über eine Elastomerschicht mit der Turmwand verbunden ist und gegenüber dieser verspannt ist und an Teilen oder Bereichen der Turmwand platziert ist, welche den zu reduzierenden Schwingungen des Turmes ausgesetzt sind, **dadurch gekennzeichnet, dass**
(i) das Formsteinmaterial selbst ein Verbundmaterial ist, welches aus einer Mischung im Wesentlichen aus groben und / oder feinen Elastomermaterialteilchen und groben und / oder feinen Bruchstücken oder Teilchen aus Formsteinmaterial besteht, und in entsprechend der Turmwand geformten Teilen in Form von Formbausteinen zur Verfügung gestellt wird; oder
(ii) das Formsteinmaterial entsprechend der Turmwandung geformte feste, harte Formbausteine aus Beton, Betonwerkstein, Naturstein, Kiesel, Ziegelstein, Kies oder Sand sind, welche untereinander durch Schichten besagten Elastomermaterials fest miteinander verbunden sind.

2. Dämpfungsvorrichtung nach Anspruch 1, **dadurch gekennzeichnet, dass** das Formsteinmaterial Beton, Betonwerkstein, Naturstein, Kiesel, Ziegelstein, Kies oder Sand ist, oder Beton, welcher mit Kies, Kiesel oder Sand versetzt ist.

3. Dämpfungsvorrichtung nach Anspruch 1 oder 2, **dadurch gekennzeichnet, dass** die Formbausteine, welche selbst aus Verbundmaterial gefertigt sind, untereinander durch eine Elastomerschicht fest miteinander verbunden sind.

4. Dämpfungsvorrichtung nach einem der Ansprüche 1 - 3, **dadurch gekennzeichnet, dass** als Elastomermaterial hochdämpfende Elastomere mit einer Shore-Härte von > 45 eingesetzt wird.

5. Dämpfungsvorrichtung nach einem der Ansprüche 1 - 4, **dadurch gekennzeichnet, dass** das Verbundmaterial über die Elastomerschicht gegenüber der Turmwand vorgespannt ist.

6. Dämpfungsvorrichtung nach Anspruch 5, **dadurch gekennzeichnet, dass** sie Vorrichtungen aufweist zur Verspannung des Verbundmaterials.

7. Dämpfungsvorrichtung nach einem der Ansprüche1 - 6, **dadurch gekennzeichnet, dass** die Formsteine die Form von Ringen oder Ringsegmenten aufweisen, welche entlang der Turmwandung innen oder außen angeordnet sind.

8. Dämpfungsvorrichtung nach Anspruch 7, **dadurch gekennzeichnet, dass** die Formsteine horizontal angeordnete umlaufende Ringe sind.

9. Dämpfungsvorrichtung nach Anspruch 7, **dadurch gekennzeichnet, dass** die Formsteine ein oder mehrere Ringsegmente darstellen, welche im Wesentlichen senkrecht zum Turm angeordnet sind.

10. Dämpfungsvorrichtung nach Anspruch 8 oder 9, **dadurch gekennzeichnet, dass** ein Ring oder Ringsegment eines Formsteins mindestens zwei senkrechten Schichten aus Verbundmaterial umfassen, wobei diese senkrechten Schichten durch Elastomerschichten miteinander verbunden sind.

11. Dämpfungsvorrichtung nach einem der Ansprüche 1 -10, **dadurch gekennzeichnet, dass** sie eine Dicke aufweist, welche das 2- bis 8-fache der Dicke der Turmwand entspricht.

12. Verwendung einer Dämpfungsvorrichtung gemäß der Ansprüche 1 -11 an und in Türmen von Windkraftanlagen zur Dämpfung von torsionalen Schwingungen und Biegeschwingungen des Turmes.

13. Windkraftanlage umfassend einen Turm, welcher mit einer Dämpfungsvorrichtung gemäß einem der Ansprüche 1 - 11 ausgestattet ist.

## Claims

1. Damping device suitable for damping torsional and flexural vibrations of towers, comprising a composite material essentially consisting of shaped block material and elastomer material which is adapted to the shape of the tower wall, where the composite material is connected to the tower wall via an elastomer layer and is tensioned against the latter and is positioned on parts or areas of the tower wall which are subjected to the tower vibrations to be reduced, **characterised in that**
(i) the shaped block material is itself a composite material which consists of a mixture essentially comprising coarse and/or fine elastomer material particles and coarse and/or fine fragments or particles of shaped block material, and is provided in parts in the form of shaped blocks shaped in accordance with the tower wall; or
(ii) the shaped block material comprises solid, hard shaped building blocks of concrete, artificial stone, natural stone, pebble, brick, gravel or sand shaped in accordance with the tower wall which are strongly connected to one another by layers of said elastomer material.

2. Damping device according to Claim 1, **characterised in that** the shaped block material is concrete, artificial stone, natural stone, pebble, brick, gravel or sand, or concrete to which gravel, pebble or sand has been added.

3. Damping device according to Claim 1 or 2, **characterised in that** the shaped building blocks which are themselves made from composite material are strongly connected to one another by an elastomer layer.

4. Damping device according to one of Claims 1 - 3, **characterised in that** the elastomer material employed comprises highly damping elastomers having a Shore hardness of >45.

5. Damping device according to one of Claims 1 - 4, **characterised in that** the composite material is pre-tensioned against the tower wall via the elastomer layer.

6. Damping device according to Claim 5, **characterised in that** it has devices for tensioning the composite material.

7. Damping device according to one of Claims 1 - 6, **characterised in that** the shaped blocks have the shape of rings or ring segments which are arranged internally or externally along the tower wall.

8. Damping device according to Claim 7, **characterised in that** the shaped blocks are horizontally arranged circumferential rings.

9. Damping device according to Claim 7, **characterised in that** the shaped blocks represent one or more ring segments which are arranged essentially perpendicular to the tower.

10. Damping device according to Claim 8 or 9, **characterised in that** a ring or ring segment of a shaped block comprises at least two vertical layers of composite material, where these vertical layers are connected to one another by elastomer layers.

11. Damping device according to one of Claims 1 - 10, **characterised in that** it has a thickness which corresponds to 2 to 8 times the thickness of the tower wall.

12. Use of a damping device according to Claims 1 - 11 on and in towers of wind turbines for damping torsional vibrations and flexural vibrations of the tower.

13. Wind turbine comprising a tower which is fitted with a damping device according to one of Claims 1 - 11.

## Revendications

1. Dispositif d'amortissement qui convient pour amortir des vibrations en torsion et en flexion de tours, comprenant un matériau composite qui est de manière essentielle constitué par un matériau en blocs conformés et par un matériau en élastomère qui est adapté à la forme de la paroi de la tour, dans lequel le matériau composite est connecté à la paroi de la tour via une couche en élastomère et est mis sous tension contre cette dernière et est positionné sur des parties ou zones de la paroi de la tour qui sont soumises aux vibrations de la tour qui sont destinées à être réduites, **caractérisé en ce que** :
(i) le matériau en blocs conformés est lui-même un matériau composite qui est constitué par un mélange qui comprend de manière essentielle des particules grossières et/ou fines de matériau en élastomère et des fragments ou des particules grossiers/grossières et/ou fins/fines de matériau en blocs conformés, et il est fourni selon des parties sous la forme de blocs conformés qui sont conformés en fonction de la paroi de la tour ; ou
(ii) le matériau en blocs conformés comprend des blocs de construction conformés solides et durs en béton, en pierre artificielle, en pierre naturelle, en galets, en brique, en gravier ou en sable qui sont conformés en fonction de la paroi de la tour, lesquels sont fermement connectés les uns aux autres au moyen de couches dudit matériau en élastomère.

2. Dispositif d'amortissement selon la revendication 1, **caractérisé en ce que** le matériau en blocs conformés est du béton, de la pierre artificielle, de la pierre naturelle, des galets, de la brique, du gravier ou du sable, ou du béton auquel du gravier, des galets ou du sable a été/ont été ajouté(s).

3. Dispositif d'amortissement selon la revendication 1 ou 2, **caractérisé en ce que** les blocs de construction conformés qui sont eux-mêmes réalisés à partir d'un matériau composite sont fermement connectés les uns aux autres au moyen d'une couche en élastomère.

4. Dispositif d'amortissement selon l'une des revendications 1 - 3, **caractérisé en ce que** le matériau en élastomère qui est utilisé comprend des élastomères hautement amortisseurs qui présentent une dureté Shore > 45.

5. Dispositif d'amortissement selon l'une des revendications 1 - 4, **caractérisé en ce que** le matériau est soumis à pré-tension contre la paroi de la tour via la couche en élastomère.

6. Dispositif d'amortissement selon la revendication 5, **caractérisé en ce qu'**il comporte des dispositifs pour soumettre à tension le matériau composite.

7. Dispositif d'amortissement selon l'une des revendications 1 - 6, **caractérisé en ce que** les blocs conformés présentent la forme d'anneaux ou de segments d'anneau qui sont agencés de façon interne ou de façon externe le long de la paroi de la tour.

8. Dispositif d'amortissement selon la revendication 7, **caractérisé en ce que** les blocs conformés sont des anneaux circonférentiels agencés horizontalement.

9. Dispositif d'amortissement selon la revendication 7, **caractérisé en ce que** les blocs conformés représentent un ou plusieurs segment(s) d'anneau qui est/sont agencé(s) de manière essentielle perpendiculairement à la tour.

10. Dispositif d'amortissement selon la revendication 8 ou 9, **caractérisé en ce qu'**un anneau ou un segment d'anneau d'un bloc conformé comprend au moins deux couches verticales de matériau composite, dans lequel ces couches verticales sont connectées les unes aux autres par des couches en élastomère.

11. Dispositif d'amortissement selon l'une des revendications 1 - 10, **caractérisé en ce qu'**il présente une épaisseur qui correspond à 2 à 8 fois l'épaisseur de la paroi de la tour.

12. Utilisation d'un dispositif d'amortissement selon les revendications 1 - 11 sur ainsi que dans des tours d'éoliennes pour amortir des vibrations en torsion et en flexion de la tour.

13. Éolienne comprenant une tour sur laquelle est adapté un dispositif d'amortissement selon l'une des revendications 1 - 11.
